# EUROPEAN PATENT APPLICATION

(11) **EP 4 600 429 A1**
(43) Date of publication of application: **13.08.2025**
(21) Application number: 23874799.2
(22) Date of filing: 02.10.2023
(51) Int. Cl.: E02F 9/20, E02F 9/24, E02F 9/26

(54) **AUTOMATIC OPERATION CONSTRUCTION MACHINE**

(30) Priority: 05.10.2022 JP 2022160933
(71) Applicant: Hitachi Construction Machinery Co., Ltd., Tokyo 110-0015 (JP)
(72) Inventor: OGAWA, Yuichi, Tsuchiura-shi, Ibaraki 300-0013 (JP); SAITO, Yuho, Tsuchiura-shi, Ibaraki 300-0013 (JP); YAMAMOTO, Shinjirou, Tsuchiura-shi, Ibaraki 300-0013 (JP); IMURA, Shinya, Tsuchiura-shi, Ibaraki 300-0013 (JP)
(74) Representative: MERH-IP Matias Erny Reichl Hoffmann Patentanwälte PartG mbB
(86) International application number: PCT/JP2023/035847
(87) International publication number: WO 2024/075672

(57) **Abstract**

Provided is an automatic operation construction machine that allows an operator to recognize in advance a start of the operation in an automatic mode when the operator switches a mode and leaves a machine body. A controller (40) does not start the operation of the machine body in an automatic control state until a remote control device (800) is operated a plurality of times in the automatic control state and the state where the operation of the machine body has not started, and the operator near the machine body is able to recognize that a non-final procedural operation, which is a non-final operation among the plurality of operations of the remote control device (800), is performed.

## Description

### Technical Field

The present invention relates to an automatic operation construction machine, and more particularly, to an automatic operation construction machine with improvement in automatic operation switching conditions.

### Background Art

The construction machines are used in not only civil engineering works, but also various works. Recently, development of automatic operation construction machines that work semi-automatically or automatically has been made. Such automatic operation construction machines are expected to improve work environments since operators can reduce the amount of operations required to perform, thus reducing the load on the operators.

As a method of switching between an automatic operation mode and a manual operation mode for the construction machine, there is disclosed a technique related to conditions in which a mode shift is performed on condition that the machine body operation is stopping or in which the machine body operation is stopped at the time of the mode shift, and then the machine body operation is allowed (for example, Patent Literature 1).

### Citation List

### Patent Literature

Patent Literature 1: JP 2016-168883 A

### Summary of Invention

### Technical Problem

However, in the system described in this Patent Literature 1, in a situation in which a worker different from an operator is holding an operation start remote control and the onboard operator sets an automatic mode or a remote mode, the worker holding the remote control may erroneously instruct to start the operation and cause the vehicle body to move while the operator is in the process of getting off the vehicle. **In** this case, the operator is unable to recognize in advance a start of the automatic operation or the remote operation, and thus may fail to timely take an avoidance action, causing interference with the vehicle body.

The present invention has been made in view of the foregoing issue, and it is an object of the present invention to provide an automatic operation construction machine that allows an operator to recognize in advance a start of the operation in an automatic mode when the operator switches a mode and leaves a machine body.

### Solution to Problem

To achieve the above object, an automatic operation construction machine of the present invention includes: a power source; an operating device provided on a machine body; a switching device that outputs a request to switch a machine body control state; a communication device that receives a signal from a remote control device operated outside of the machine body; and a controller that determines the machine body control state on the basis of an output from the switching device, and performs operation control according to the machine body control state. The machine body control state includes at least a manual control state of operation according to an operation command from the operating device and an automatic control state of operation according to an operation command set in advance or an operation command based on a signal received by the communication device. The automatic control state includes an automatic control inactive state in which the machine body is in a non-operating state and an automatic control active state in which the machine body is in an operating state. The controller sets the automatic control inactive state when the machine body control state is switched from the manual control state to the automatic control state by the switching device, and allows transition from the automatic control inactive state to the automatic control active state by a plurality of operations of the remote control device in the automatic control inactive state.

### Advantageous Effects of Invention

According to the present invention, even when a start of the automatic operation is attempted while the operator is getting off the machine, the machine body will not immediately operate since the operation of the machine body does not start until the remote control device (remote control) is operated a plurality of times, and the operator getting off the machine can recognize that an operation start procedure is in progress.

Other problems, configurations, and advantageous effects will become apparent from the following description of embodiments.

### Brief Description of Drawings

Fig. 1 is a perspective view of the configuration of a hydraulic excavator of a first embodiment.
Fig. 2A is a side view of the hydraulic excavator of the first embodiment.
Fig. 2B is a top view of the hydraulic excavator of the first embodiment.
Fig. 3 is a configuration diagram of a control system of the hydraulic excavator of the first embodiment.
Fig. 4 is a detailed configuration diagram of a solenoid valve unit of the first embodiment.
Fig. 5 is a detailed configuration diagram of a solenoid valve unit of the first embodiment.
Fig. 6 is a hardware configuration diagram of a controller of the hydraulic excavator of the first embodiment.
Fig. 7 is a functional block diagram of the controller of the first embodiment.
Fig. 8 is a state transition diagram of a state transition determination section of the first embodiment.
Fig. 9 is a calculation flowchart of a target operation calculation section of the first embodiment.
Fig. 10 is a calculation flowchart of an engine stop command section of the first embodiment.
Fig. 11 is an output state transition diagram of an engine drive command section of the first embodiment.
Fig. 12 is a perspective view of the configuration of a hydraulic excavator in a modification of the first embodiment.
Fig. 13 is a functional block diagram of a controller of a second embodiment.
Fig. 14 is a state transition diagram of a state transition determination section of the second embodiment.

### Description of Embodiments

Hereinafter, embodiments of the present invention will be described by referring to the accompanying drawings. In each drawing, the same reference numeral is given to a part having the same function and the repeated description may be omitted. In the following description of the present specification, although a hydraulic excavator provided with a bucket 10 as a work implement (attachment) at the end of the work device will be described by way of example, the present invention is applicable to a hydraulic excavator provided with a work implement other than the bucket, or to construction machines other than the hydraulic excavator.

Further, in the following description of the present specification, in a case where there is a plurality of the same constituent elements, alphabets may be given to the ends of the reference numerals (numbers), but the plurality of such constituent elements may be collectively denoted without the alphabets. For example, when traveling hydraulic motors 3a, 3b respectively on the right and left sides (right traveling hydraulic motor 3a, left traveling hydraulic motor 3b) are present, these may be collectively denoted as a traveling hydraulic motor 3.

### [First Embodiment]

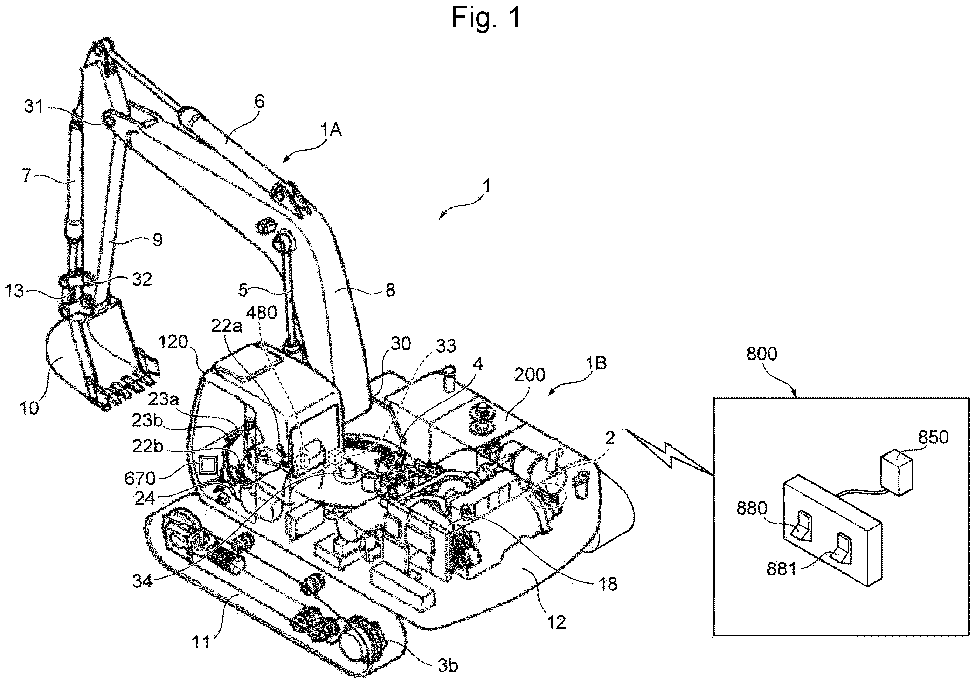

A first embodiment of the present invention will be described referring to Fig. 1 to Fig. 11.

### <Configuration of Hydraulic Excavator>

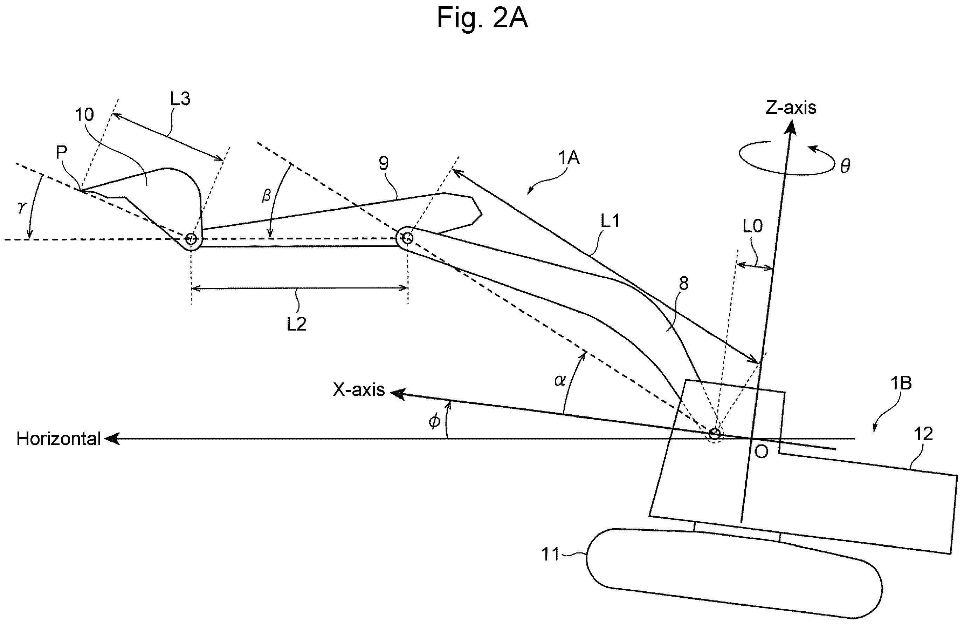

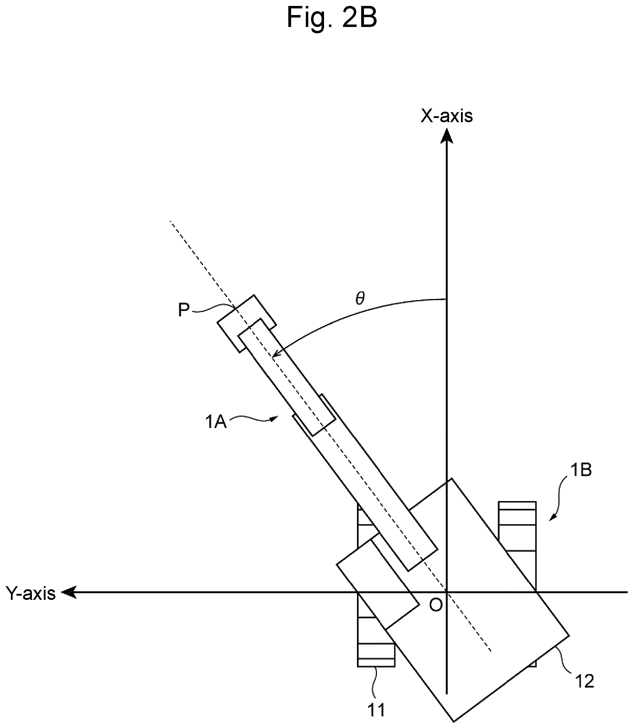

The configuration of the hydraulic excavator of the first embodiment will be described referring to Fig. 1, and Fig. 2A and Fig. 2B.

Fig. 1 is a perspective view of the configuration of a hydraulic excavator 1 of the first embodiment. The hydraulic excavator 1 includes an articulated front work device 1A, a machine body 1B, and a controller (not illustrated in Fig. 1).

The front work device 1A includes a boom cylinder 5, an arm cylinder 6, a bucket cylinder 7, a boom 8, an arm 9, a bucket 10, a bucket link 13, a boom angle sensor 30, an arm angle sensor 31, and a bucket angle sensor 32. The boom 8, the arm 9, and the bucket 10 are a plurality of driven members each rotating in the vertical direction. The front work device 1A is made up of these members that are coupled with each other.

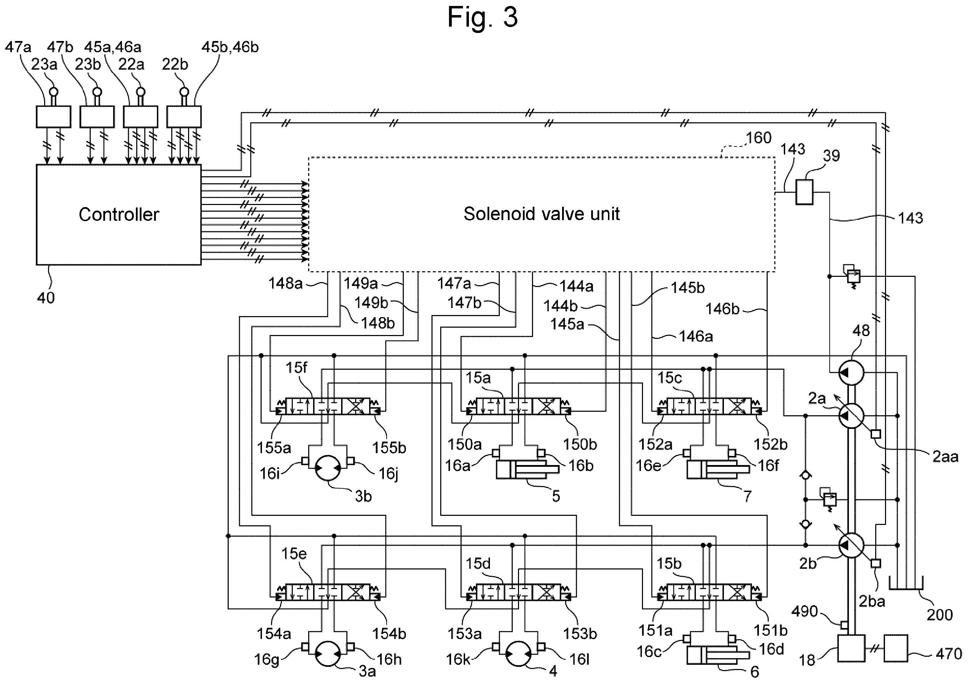

The machine body 1B includes a lower traveling body 11 and an upper swing body 12. The lower traveling body 11 is driven by a pair of left and right traveling hydraulic motors 3a (Fig. 3, etc.) and 3b to travel. The upper swing body 12 is mounted on the lower traveling body 11 and is configured to be able to swing.

The proximal end of the boom 8 is rotatably supported in the front part of the upper swing body 12 via a boom pin. The arm 9 is rotatably coupled to the distal end of the boom 8 via an arm pin. The bucket 10 is rotatably coupled to the distal end of the arm 9 via a bucket pin. The boom 8 is driven by the boom cylinder 5, the arm 9 is driven by the arm cylinder 6, and the bucket 10 is driven by the bucket cylinder 7.

Fig. 2A is a side view of the hydraulic excavator 1. As illustrated in Fig. 2A, when the X-axis is defined as being parallel to the longitudinal direction of the lower traveling body 11 and the Z-axis is defined as being perpendicular to the X-axis, α represents a turn angle of the boom 8; β represents a turn angle of the arm 9; and γ represents a turn angle of the bucket 10. ϕ represents an inclination angle of the upper swing body 12 (the machine body 1B) relative to a reference plane (for example, a horizontal plane). P represents the distal end of the bucket 10.

Fig. 2B is a top view of the hydraulic excavator 1. As illustrated in Fig. 2B, θ represents a relative angle between the upper swing body 12 and the lower traveling body 11.

Referring back to Fig. 1, the boom angle sensor 30 is attached to the boom pin so as to be able to measure the turn angle α of the boom 8. The arm angle sensor 31 is attached to the arm pin so as to be able to measure the turn angle β of the arm 9. The bucket angle sensor 32 is attached to the bucket link 13 so as to be able to measure the turn angle γ of the bucket 10. It is noted that each of the angle sensors 30, 31, and 32 may be replaced with an angle sensor relative to the reference plane (for example, the horizontal plane).

The upper swing body 12 includes an operator's cab 120, a hydraulic pump 2, a swing hydraulic motor 4, an engine 18, a machine body inclination angle sensor 33, a swing angle sensor 34, and a tank 200. In the operator's cab 120, a right operation lever 22a, a left operation lever 22b, a right traveling lever 23a, a left traveling lever 23b, a gate lock lever 24, an engine speed setting device 480, and a control state selection switch 670 are disposed. Hereinafter, in this specification, the right operation lever 22a and the left operation lever 22b may collectively be referred to as an operating device 22, and the right traveling lever 23a and the left traveling lever 23b may collectively be referred to as an operating device 23.

The swing hydraulic motor 4 causes the upper swing body 12 to swing. Here, in this specification, the traveling hydraulic motors 3a and 3b, the swing hydraulic motor 4, the boom cylinder 5, the arm cylinder 6, and the bucket cylinder 7 may collectively be referred to as "actuators."

The machine body inclination angle sensor 33 is attached to the upper swing body 12 at a desired position, and detects the inclination angle ϕ of the upper swing body 12 (the machine body 1B) relative to the reference plane (for example, the horizontal plane). The swing angle sensor 34 is disposed on a swing center axis of the upper swing body 12 so as to measure the relative angle θ between the upper swing body 12 and the lower traveling body 11.

The engine 18 is a prime mover (power source), and drives the hydraulic pump 2 and a pilot pump (described later). The engine speed setting device 480 is a device for setting the speed of the engine 18. The engine speed setting device 480 is a dial type variable resistor. The dial operation changes the voltage output from the engine speed setting device 480.

The control state selection switch 670 is a switch for selecting a machine body control state of the hydraulic excavator 1. The control state selection switch 670 outputs a switch signal for requiring switching of the machine body control state. In the present embodiment, the control state selection switch 670 can switch between an automatic control state (automatic control mode) of operation according to an operation command (target operation) set in advance regardless of the operation of the operating device 22, 23 when a switch signal output from the control state selection switch 670 is on, and a manual control state (manual control mode) of operation according to an operation command from the operating device 22, 23 when a switch signal is off.

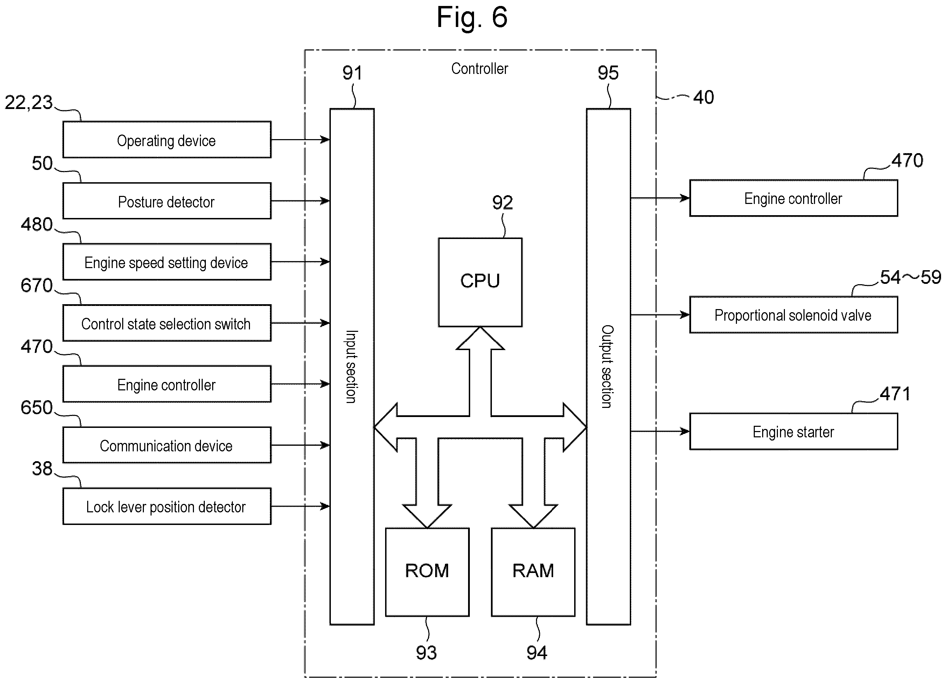

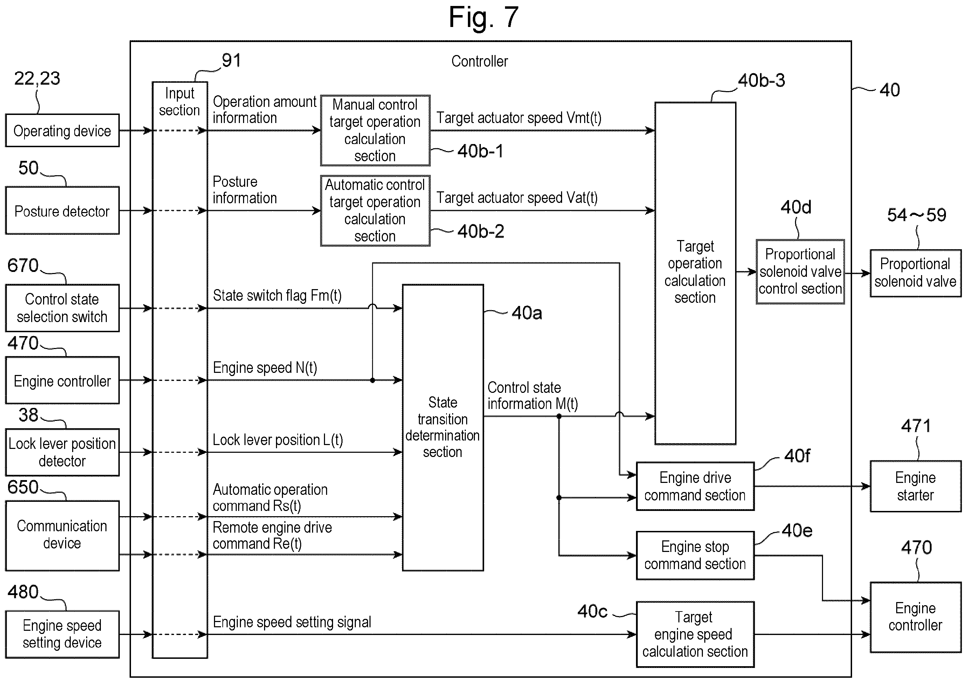

The hydraulic excavator 1 also includes a communication device 650 (not illustrated in Fig. 1, but illustrated in Fig. 6, Fig. 7) for receiving and transmitting signals from and to a remote control device 800.

The remote control device 800 is a device for starting or stopping remotely (outside of the hydraulic excavator 1) the automatic operation of the hydraulic excavator 1, and includes a remote operation start/stop switch 880 and a remote engine start/stop switch 881. A switch state signal of the remote operation start/stop switch 880 and a switch state signal of the remote engine start/stop switch 881 are transmitted to a controller 40 (not illustrated in Fig. 1) of the hydraulic excavator 1 via a communication device 850 and the communication device 650.

It is noted that in the present embodiment, although the remote control device 800 including two switches, the remote operation start/stop switch 880 and the remote engine start/stop switch 881, is described by way of example, the input aspect is not limited to the switch input, and may be a lever input or a touch panel input, a speech input, or the like. **In** addition. the number of switches (inputs) is not limited to two, and may be, for example, three or more depending on the operation aspect of the automatic operation.

The above is the configuration of the hydraulic excavator 1 of the first embodiment.

### <Configuration of Control System of Hydraulic Excavator>

Next, the configuration of a control system of the hydraulic excavator of the first embodiment will be described referring to Fig. 3.

Fig. 3 is a configuration diagram illustrating the configuration of the control system of the hydraulic excavator 1. As illustrated in Fig. 3, the control system of the hydraulic excavator 1 includes hydraulic pumps 2a and 2b, flow rate control valves 15a to 15f, load detectors 16a to 16l, the engine 18, regulators 2aa and 2ba, the right operation lever 22a and the left operation lever 22b (operating device 22), the right traveling lever 23a and the left traveling lever 23b (operating device 23), the gate lock lever 24 (Fig. 1), a lock valve 39, the controller 40 serving as the control device, operating devices 45a and 45b, operating devices 46a and 46b, operating devices 47a and 47b, a pilot pump 48, a pump line 143, pilot lines 144a to 149b, hydraulic drive sections 150a to 155b, a solenoid valve unit 160, the tank 200, an engine controller 470, an engine speed detector 490, and an engine starter 471 (not illustrated in Fig. 3, but illustrated in Fig. 6, Fig. 7).

The operating devices 22 and 23, and the gate lock lever 24 are provided in the operator's cab 120 and operated by an operator. The operating devices 22 and 23 are of an electric lever system, and generate an electrical signal corresponding to the amount and direction of the operation by the operator. The electrical signal thus generated is input to the controller 40 via the operating devices 45a to 47b. The controller 40 outputs the electrical signal to the solenoid valve unit 160 to drive a proportional solenoid valve corresponding to the operation input to the operating devices 22 and 23.

The operating devices 45a to 47b are provided in the operator's cab 120. The operating device 47a is connected to the right traveling lever 23a and outputs a signal for operating the right traveling hydraulic motor 3a to the controller 40. The operating device 47b is connected to the left traveling lever 23b and outputs a signal for operating the left traveling hydraulic motor 3b to the controller 40. The operating devices 45a and 46a are connected to the common right operation lever 22a and output signals for operating the boom cylinder 5 and the bucket cylinder 7 to the controller 40. The operating devices 45b and 46b are connected to the common left operation lever 22b and output signals for operating the arm cylinder 6 and the swing hydraulic motor 4 to the controller 40.

The engine 18 drives the hydraulic pumps 2a and 2b and the pilot pump 48. When the engine 18 starts rotating, the engine starter 471 rotates to some extent to assist the startup of the engine 18. The hydraulic pumps 2a and 2b are variable displacement pumps in which the displacement is controlled by the regulators 2aa and 2ba, respectively. The pilot pump 48 is a fixed displacement pump. The engine controller 470 controls the speed of the engine 18 or the like in accordance with a control signal from the controller 40. The engine speed detector 490 is a rotation sensor for detecting the speed of the engine 18.

The hydraulic pump 2 and the pilot pump 48 suck the hydraulic fluid from the tank 200. In the present embodiment, a control signal output from the controller 40 is input to the regulators 2aa and 2ba. Although a detailed configuration of the regulators 2aa and 2ba will be omitted, a discharge flow rate of the hydraulic pumps 2a and 2b is controlled in accordance with the control signal.

The pressure oil discharged from the hydraulic pump 2 is supplied to the boom cylinder 5 via the flow rate control valve 15a, to the arm cylinder 6 via the flow rate control valve 15b, to the bucket cylinder 7 via the flow rate control valve 15c, to the swing hydraulic motor 4 via the flow rate control valve 15d, to the right traveling hydraulic motor 3a via the flow rate control valve 15e, and to the left traveling hydraulic motor 3b via the flow rate control valve 15f. With the pressure oil supplied, the boom cylinder 5, the arm cylinder 6, and the bucket cylinder 7 extend and retract, whereby the boom 8, the arm 9, and the bucket 10 rotatably move, respectively, and the position and posture of the bucket 10 change. In addition, with the pressure oil supplied, the swing hydraulic motor 4 rotates, whereby the upper swing body 12 swings relative to the lower traveling body 11. In addition, with the pressure oil supplied, the right traveling hydraulic motor 3a and the left traveling hydraulic motor 3b rotate, whereby the lower traveling body 11 travels.

The boom cylinder 5 is provided with the load detectors 16a and 16b so as to detect a cylinder pressure. The arm cylinder 6 is provided with the load detectors 16c and 16d, and the bucket cylinder 7 is provided with the load detectors 16e and 16f. In the present embodiment, the load detectors 16a to 16f are pressure sensors, and detect pressures on the bottom side and the rod side of each of the boom cylinder 5, the arm cylinder 6, and the bucket cylinder 7, and output the pressures as electrical signals to the controller 40. **In** addition, the right traveling hydraulic motor 3a is provided with the load detectors 16g and 16h, the left traveling hydraulic motor 3b is provided with the load detectors 16i and 16j, and the swing hydraulic motor 4 is provided with the load detectors 16k and 16l. **In** the present embodiment, the load detectors 16g to 16l are pressure sensors, and detect pressures in the input/output lines of each of the right traveling hydraulic motor 3a, the left traveling hydraulic motor 3b, and the swing hydraulic motor 4, and output the pressures as electrical signals to the controller 40. It is noted that in Fig. 3, connection lines from the load detectors 16a to 16l to the controller 40 are not illustrated due to spaces.

The pump line 143, which is a discharge pipe of the pilot pump 48, first passes through the lock valve 39, and then is connected to each proportional solenoid valve in the solenoid valve unit 160. The lock valve 39 (locking device) is a solenoid selector valve in the present embodiment, and a solenoid drive section thereof is electrically connected to a lock lever position detector 38 (not illustrated in Fig. 3, but illustrated in Fig. 6, Fig. 7) of the gate lock lever 24. The gate lock lever has a rotation center, and the operator can manually rotate the gate lock lever. The gate lock lever may be configured to be rotatable in a range from an angle at which the gate lock lever contacts an upper stopper to an angle at which the gate lock lever contacts a lower stopper, for example. The lock lever position detector 38 is a switch sensor, and may have a structure in which when the gate lock lever contacts the lower stopper, the switch is simultaneously pressed by the gate lock lever. Accordingly, the lock lever position detector 38 outputs a signal corresponding to the position of the gate lock lever 24 to the lock valve 39, thereby detecting an enabled state or a disabled state of the operating devices 22 and 23 by the lock valve 39 (locking device). When the position of the gate lock lever is in a lock position, the lock valve 39 closes to shut off the pump line 143. When the position of the gate lock lever is in an unlock position, the lock valve 39 opens to connect the pump line 143. That is, in a state where the pump line 143 is shut off, the operation of the operating devices 22 and 23 is disabled, and the operation such as traveling, swinging, excavation, or the like is prohibited. **In** a state where the pump line 143 is connected, the operation of the operating devices 22 and 23 is enabled, and the operation such as traveling, swinging, excavation, or the like is allowed.

The above is the configuration of the control system of the hydraulic excavator 1 of the first embodiment.

### <Configuration of Solenoid Valve Unit of Control System of Hydraulic Excavator>

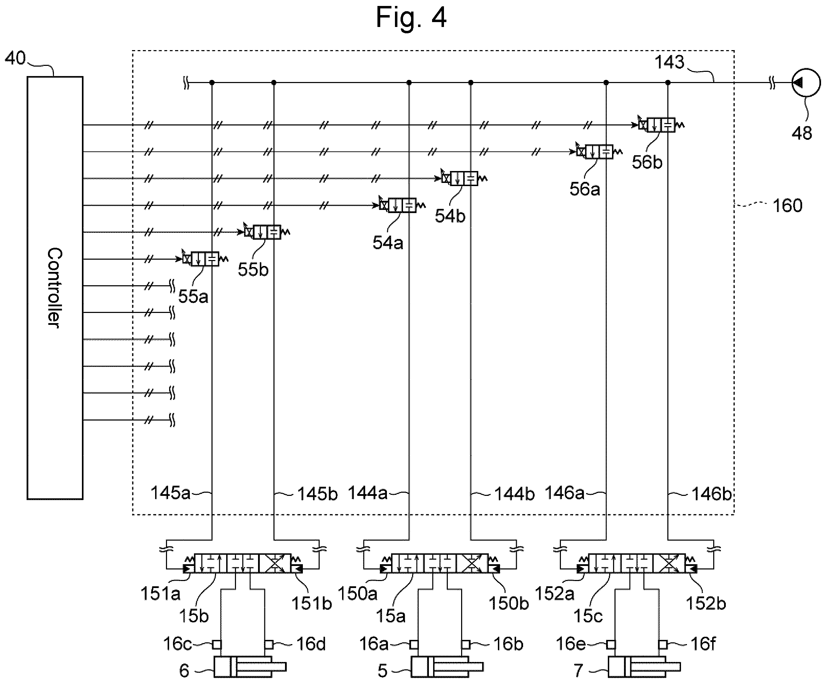

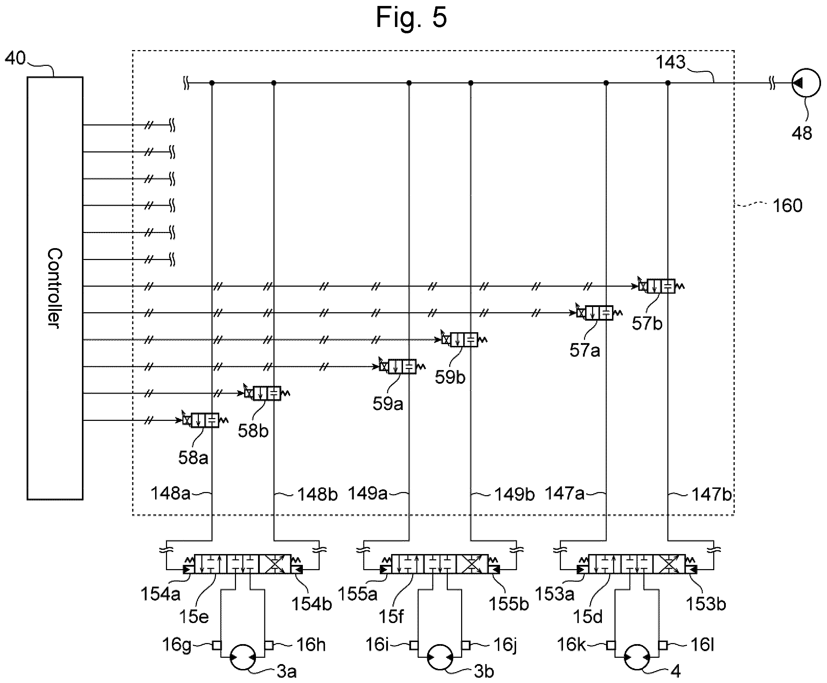

Next, the detailed configuration of the solenoid valve unit 160 of Fig. 3 will be described referring to Fig. 4 and Fig. 5.

Fig. 4 and Fig. 5 are diagrams illustrating detailed configurations of the solenoid valve unit 160. A primary port side of the solenoid valve unit 160 is connected to the pilot pump 48 via the pump line 143. The solenoid valve unit 160 includes proportional solenoid valves 54a to 59b that output a pilot pressure from the pilot pump 48 to the pilot lines 144a to 149b while reducing the pilot pressure. The proportional solenoid valves 54a to 59b are used as control signals for driving the flow rate control valves 15a to 15f in accordance with the input electrical signals.

As illustrated in Fig. 4, the proportional solenoid valves 54a and 54b are connected to the hydraulic drive sections 150a and 150b of the flow rate control valve 15a via the pilot lines 144a and 144b. The proportional solenoid valves 55a and 55b are connected to the hydraulic drive sections 151a and 151b of the flow rate control valve 15b via the pilot lines 145a and 145b. The proportional solenoid valves 56a and 56b are connected to the hydraulic drive sections 152a and 152b of the flow rate control valve 15c via the pilot lines 146a and 146b.

As illustrated in Fig. 5, the proportional solenoid valves 57a and 57b are connected to the hydraulic drive sections 153a and 153b of the flow rate control valve 15d via the pilot lines 147a and 147b. The proportional solenoid valves 58a and 58b are connected to the hydraulic drive sections 154a and 154b of the flow rate control valve 15e via the pilot lines 148a and 148b. The proportional solenoid valves 59a and 59b are connected to the hydraulic drive sections 155a and 155b of the flow rate control valve 15f via the pilot lines 149a and 149b.

The proportional solenoid valves 54a to 59b have the minimum opening when they are not energized, and the opening increases as current as the control signal from the controller 40 is increased. In this way, the proportional solenoid valves 54a to 59b each have an opening corresponding to the control signal from the controller 40.

Driving the proportional solenoid valves 54a to 59b by outputting the control signal from the controller 40 to the solenoid valve unit 160 allows the pilot pressure to be generated even when there is no operation by the operator on the corresponding operating devices 22 and 23, and thus, the actions of the actuators can be forcibly generated.

The above is the detailed configuration of the solenoid valve unit 160 of Fig. 3.

### <Hardware Configuration of Controller>

Next, the hardware configuration of the controller of the hydraulic excavator of the first embodiment will be described referring to Fig. 6.

Fig. 6 is a hardware configuration diagram of the controller 40. As illustrated in Fig. 6, the controller 40 is a computer device including an input section 91, a central processing unit (CPU) 92 that is a processor, a read only memory (ROM) 93, a random access memory (RAM) 94, and an output section 95.

The control system illustrated in Fig. 6 includes the operating devices 22 and 23 connected to the controller 40 (control device), a posture detector 50, the engine speed setting device 480, the control state selection switch 670, the communication device 650 that receives a signal from the remote control device 800, the lock lever position detector 38, the engine controller 470, the engine starter 471, and the proportional solenoid valves 54 to 59. The posture detector 50 is made up of the boom angle sensor 30, the arm angle sensor 31, the bucket angle sensor 32, the machine body inclination angle sensor 33, and the swing angle sensor 34 as described above. These angle sensors 30, 31, 32, and 33 function as a posture sensor of the front work device 1A.

The input section 91 receives, as inputs, a signal from the posture detector 50, a signal indicating an operation amount from the operating devices 22 and 23, a signal from the engine speed setting device 480, a signal from the control state selection switch 670, a signal from the engine controller 470, a signal from the remote control device 800 via the communication device 650, and a signal from the lock lever position detector 38, and converts the signals into a form suitable for computation by the CPU 92. The ROM 93 is a recording medium having stored therein a control program for executing control content (described later) and various kinds of information needed to execute the control computation, and the like. The CPU 92 performs predetermined computing processing on the signals received from the input section 91, the ROM 93, and the RAM 94 according to the control program stored in the ROM 93. The output section 95 generates signals for output according to a computation result obtained by the CPU 92, and outputs the signals to the engine controller 470, the engine starter 471, and the proportional solenoid valves 54a to 59b, thereby controlling the driving of the engine 18, the engine starter 471, and the actuators.

It is noted that the controller 40 of Fig. 6 includes a semiconductor memory such as the ROM 93 and the RAM 94 as the storage device. However, the memory may be replaced with any other type of storage device; for example, the controller 40 may include a magnetic storage device such as a hard disk drive.

The above is the hardware configuration of the controller of the hydraulic excavator of the first embodiment.

### <Functional Block inside of Controller>

Next, the functional block inside of the controller of the first embodiment will be described referring to Fig. 7. Fig. 7 is a functional block diagram of the controller 40.

The controller 40 includes a state transition determination section 40a, a manual control target operation calculation section 40b-1, an automatic control target operation calculation section 40b-2, a target operation calculation section 40b-3, a target engine speed calculation section 40c, a proportional solenoid valve control section 40d, an engine stop command section 40e, and an engine drive command section 40f.

The state transition determination section 40a receives a state switch flag Fm(t) that is a signal transmitted from the control state selection switch 670 and then converted in the input section 91, an engine speed N(t) that is a signal transmitted from the engine controller 470 and then converted in the input section 91, a lock lever position L(t) that is a signal transmitted from the lock lever position detector 38 and then converted in the input section 91, an automatic operation command (also referred to as an automatic operation start command) Rs(t) and a remote engine drive command Re(t) that are signals transmitted from the communication device 650 and then converted in the input section 91, and calculates (determines) control state information M(t) based on the received information. Then, the state transition determination section 40a transmits the information of the control state information M(t) to the target operation calculation section 40b-3, the engine stop command section 40e, and the engine drive command section 40f.

It is noted that in the present embodiment, the automatic operation command (automatic operation start command) Rs(t) is a signal of either 0 or 1: the signal 1 is a command to start the automatic operation and the signal 0 is a command to stop the automatic operation. The remote engine drive command Re(t) is a signal of either 0 or 1: the signal 1 is a command to drive the engine and the signal 0 is a command to stop the engine. When the engine is continuously driven, the remote engine drive command Re(t) is always 1. The lock lever position L(t) is a signal of either 0 or 1: the signal 1 indicates the lock position and the signal 0 indicates the release position. The state switch flag Fm(t) is a signal of either 0 or 1: the signal 1 is a command to transition to the automatic control state and the signal 0 is a command to transition to the manual control state. The control state information M(t) is a signal from 0 to 5: the signal 0 indicates the manual control mode, the signal 1 indicates the automatic control inactive mode 1, the signal 2 indicates the automatic control inactive mode 2, the signal 3 indicates the standby mode, the signal 4 indicates the automatic control active mode, and the signal 5 indicates the automatic control inactive mode 3.

The manual control target operation calculation section 40b-1 receives operation amount information that is a signal obtained by converting in the input section 91 the electrical signal corresponding to the amount and direction of the operation by the operator transmitted from the operating device 22, 23, and calculates a target actuator speed Vmt(t). Then, the manual control target operation calculation section 40b-1 transmits the information of the target actuator speed Vmt(t) to the target operation calculation section 40b-3.

Here, the operation amount information is angle information on each lever. The manual control target operation calculation section 40b-1 inputs the angle information to an angle-target actuator speed table, and has, as its output, the target actuator speed Vmt(t) that is a target speed of each actuator.

The automatic control target operation calculation section 40b-2 receives posture information that is a signal transmitted from the posture detector 50 and then converted in the input section 91, and calculates a target actuator speed Vat(t). Then, the automatic control target operation calculation section 40b-2 transmits the information of the target actuator speed Vat(t) to the target operation calculation section 40b-3.

The ROM 93 stores target operations of the hydraulic excavator 1 such as a target trajectory of a bucket end, a moving route in traveling, or the like. The controller 40 performs feedback control with the posture information as inputs so that the actual operation matches the target operation.

The target operation calculation section 40b-3 receives the target actuator speed Vmt(t) transmitted from the manual control target operation calculation section 40b-1, the target actuator speed Vat(t) transmitted from the automatic control target operation calculation section 40b-2, and the control state information M(t) transmitted from the state transition determination section 40a, and calculates a final target actuator speed. Then, the target operation calculation section 40b-3 outputs the final target actuator speed to the proportional solenoid valve control section 40d.

The proportional solenoid valve control section 40d outputs control command values of the corresponding proportional solenoid valves 54 to 59 in accordance with the target actuator speed output from the target operation calculation section 40b-3.

The target engine speed calculation section 40c receives an engine speed setting signal obtained by converting in the input section 91 a voltage value output from the engine speed setting device 480 and read by the controller 40, and calculates a target engine speed. Then, the target engine speed calculation section 40c transmits the target engine speed to the engine controller 470.

The engine speed setting signal is a voltage value. The target engine speed calculation section 40c inputs the voltage value information to a voltage-target engine speed table, and has the target engine speed as its output.

The engine stop command section 40e receives the control state information M(t), and calculates a value of an engine stop command. Then, the engine stop command section 40e outputs the engine stop command to the engine controller 470.

The engine drive command section 40f receives the engine speed N(t) and the control state information M(t), and calculates an engine starter drive command for starting the engine. Then, the engine drive command section 40f outputs the engine starter drive command to the engine starter 471.

The above is the functional block inside of the controller of the first embodiment.

### <State Transition Flow>

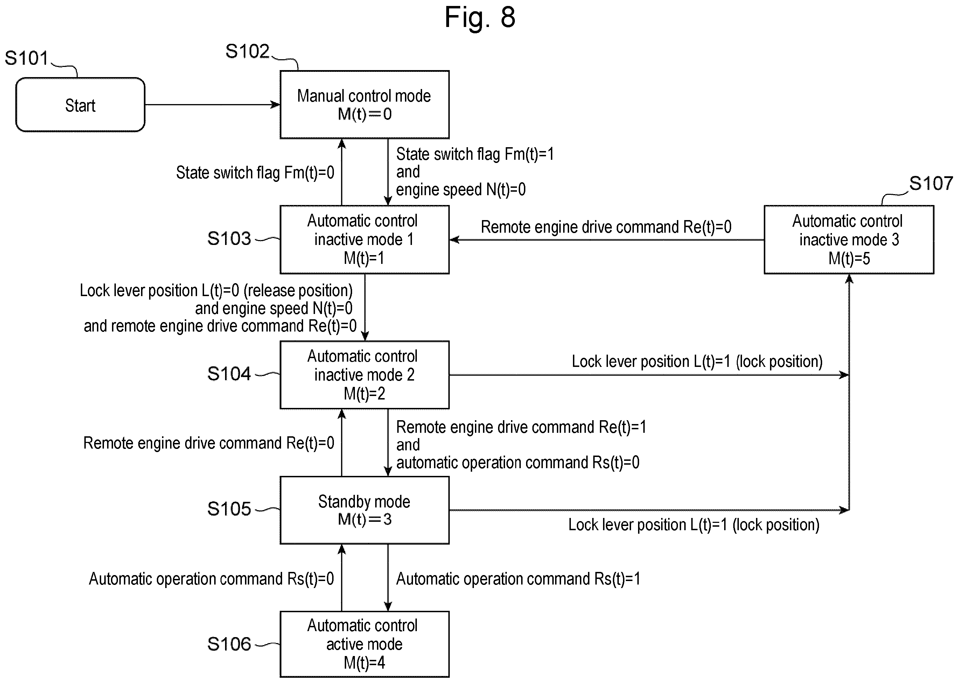

Next, the state transition of the state transition determination section 40a of the first embodiment will be described referring to Fig. 8. Fig. 8 is a state transition diagram of the state transition determination section 40a. **In** this figure, any one of the states continues until conditions for transition to another state are satisfied.

S101 is the start of calculation in the state transition determination section 40a.

In S102, the state transition determination section 40a determines that the control state is the manual control mode, and sets the control state information M(t) to 0. When the state switch flag Fm(t) becomes 1 by the switching operation of the control state selection switch 670 and the engine speed N(t) is 0 in S102, the state transitions to S103. That is, S103 represents the automatic control state and the state where the operation of the machine body has not started (automatic control inactive state). It is noted that the automatic control state means an operating state in accordance with an operation command (target operation) set in advance regardless of the operation of the operating device 22, 23 or in accordance with an operation command based on the signal received by the communication device 650.

In S103, the state transition determination section 40a determines that the control state is the automatic control inactive mode 1, and sets the control state information M(t) to 1. When the state switch flag Fm(t) becomes 0 by the switching operation of the control state selection switch 670 in S103, the state transitions to S102. Meanwhile, if the lock lever position L(t) is 0 and the engine speed N(t) is 0 and the remote engine drive command Re(t) is 0, the state transitions to S104. That is, S104 represents the automatic control state, the state where the operation of the machine body has not started (automatic control inactive state), the gate lock lever is in the release position (unlock position), and the state where the engine is stopping. The engine may be stopped by setting the remote engine drive command Re(t) to 0 with the remote engine start/stop switch 881 of the remote control device 800 turned to the OFF position or by any other means.

In S104, the state transition determination section 40a determines that the control state is the automatic control inactive mode 2, and sets the control state information M(t) to 2. When the remote engine drive command Re(t) becomes 1 by turning the remote engine start/stop switch 881 of the remote control device 800 to the ON position and the automatic operation command Rs(t) becomes 0 by the operation of the remote operation start/stop switch 880 in S104, the state transitions to S105. That is, S105 represents the automatic control state, the state where the operation of the machine body has not started (automatic control inactive state), the gate lock lever is in the release position (unlock position), and the state where the engine is driven (started) by the remote control device 800. Meanwhile, when the lock lever position L(t) becomes 1 by the operation of the gate lock lever in S104, the state transitions to S107. That is, in this case, S107 represents the automatic control state, the state where the operation of the machine body has not started (automatic control inactive state), the gate lock lever is in the lock position, and the state where the engine is stopping.

In S105, the state transition determination section 40a determines that the control state is the standby mode, and sets the control state information M(t) to 3. If the automatic operation command Rs(t) becomes 1 by the operation of the remote operation start/stop switch 880 of the remote control device 800 in S105, the state transitions to S106. That is, S106 represents the automatic control state, and the state where the automatic operation is started by the remote control device 800 (automatic control active state). Meanwhile, when the lock lever position L(t) becomes 1 by the operation of the gate lock lever in S105, the state transitions to S107. That is, in this case, S107 represents the automatic control state, the state where the operation of the machine body has not started (automatic control inactive state), the gate lock lever is in the lock position, and the state where the engine is driven (started) by the remote control device 800. Meanwhile, when the remote engine drive command Re(t) becomes 0 by the operation of the remote engine start/stop switch 881 of the remote control device 800 in S105, the state transitions to S104. That is, as described above, S104 represents the automatic control state, the state where the operation of the machine body has not started (automatic control inactive state), the gate lock lever is in the release position (unlock position), and the state where the engine is stopped by the remote control device 800.

In S106, the state transition determination section 40a determines that the control state is the automatic control active mode, and sets the control state information M(t) to 4. If the automatic operation command Rs(t) becomes 0 by the operation of the remote operation start/stop switch 880 of the remote control device 800 in S106, the state transitions to S105. That is, as described above, S105 represents the automatic control state, and the state where the automatic operation is stopped by the remote control device 800 (the state where the operation of the machine body has not started, the gate lock lever is in the release position (unlock position), and the state where the engine is driven (started) by the remote control device 800).

In S107, the state transition determination section 40a determines that the control state is the automatic control inactive mode 3, and sets the control state information M(t) to 5. If the remote engine drive command Re(t) becomes 0 by the operation of the remote engine start/stop switch 881 of the remote control device 800 in S107 (that is, if the remote control device 800 is operated to stop the engine), the state transitions to S103.

In order to switch from the manual control mode to the automatic control active mode for automatic operation, first, the state switch flag Fm(t) is set to 1. This results in the automatic control state, and the state where the operation of the machine body has not started (automatic control inactive state). Next, the lock lever position L(t) is set to 0 and the engine speed N(t) is set to 0, that is, the engine is stopped. Next, the remote engine drive command Re(t) is set to 1, and the engine is driven (started) by the remote control device 800. After that, the automatic operation command Rs(t) is set to 1, and the automatic operation is started by the remote control device 800 (automatic control active state). It is noted that the engine may be stopped by setting the remote engine drive command Re(t) to 0 by the operation of the remote engine start/stop switch 881 of the remote control device 800 or by any other means.

In order to switch from the automatic control active mode to the manual control mode for manual operation, first, the automatic operation command Rs(t) is set to 0, and the automatic operation is stopped by the remote control device 800. After that, the lock lever position L(t) is set to 1, and then the remote engine drive command Re(t) is set to 0 to stop the engine by the remote control device 800, and then further the state switch flag Fm(t) is set to 0. Alternatively, before setting the lock lever position L(t) to 1, the remote engine drive command Re(t) may be set to 0 to stop the engine by the remote control device 800.

The above is the state transition of the state transition determination section 40a of the first embodiment.

### <Calculation Flow of Target Operation Calculation Section>

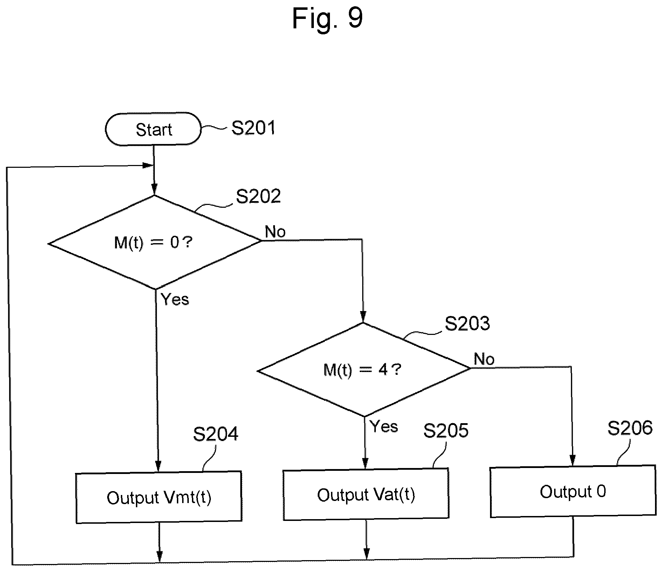

Next, the calculation flow of the target operation calculation section 40b-3 of the first embodiment will be described referring to Fig. 9. Fig. 9 is a calculation flowchart of the target operation calculation section 40b-3. This calculation flow is performed iteratively while the controller 40 is operating, for example.

S201 is the start of calculation in the target operation calculation section 40b-3.

In S202, the target operation calculation section 40b-3 determines whether the control state information M(t) is 0, that is, whether the control state is the manual control mode. If the control state information M(t) is 0, the determination in S202 is Yes, and the process proceeds to S204. If the control state information M(t) is other than 0, the determination in S202 is No, and the process proceeds to S203.

In S203, the target operation calculation section 40b-3 determines whether the control state information M(t) is 4, that is, whether the control state is the automatic control active mode. If the control state information M(t) is 4, the determination in S203 is Yes, and the process proceeds to S205. If the control state information M(t) is other than 4, the determination in S203 is No, and the process proceeds to S206.

In S204, the control state is the manual control mode, and thus the final target actuator speed is Vmt(t). Then, the target operation calculation section 40b-3 outputs this value to the proportional solenoid valve control section 40d.

In S205, the control state is the automatic control active mode, and thus the final target actuator speed is Vat(t). Then, the target operation calculation section 40b-3 outputs this value to the proportional solenoid valve control section 40d.

In S206, the control state is one of the standby mode and the automatic control inactive modes 1 to 3, and thus the final target actuator speed is 0. Then, the target operation calculation section 40b-3 outputs this value to the proportional solenoid valve control section 40d.

The above is the calculation flow of the target operation calculation section 40b-3 of the first embodiment.

### <Calculation Flow of Engine Stop Command Section>

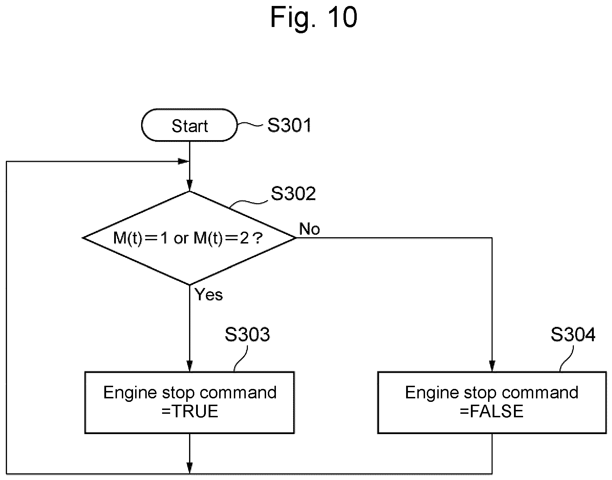

Next, the calculation flow of the engine stop command section 40e of the first embodiment will be described referring to Fig. 10. Fig. 10 is a calculation flowchart of the engine stop command section 40e. This calculation flow is performed iteratively while the controller 40 is operating, for example.

S301 is the start of calculation in the engine stop command section 40e.

In S302, the engine stop command section 40e determines whether the control state information M(t) is 1 or 2. As illustrated in Fig. 8, the control state information M(t) of 1, 2 represents the automatic control inactive mode 1, 2, and in this state, the engine is in a stopped state. If the control state information M(t) is 1 or 2, the determination in S302 is Yes, and the process proceeds to S303. If the control state information M(t) is other than 1 or 2, the determination in S302 is No, and the process proceeds to S304.

In S303, the engine stop command section 40e determines that the engine should be in the stopped state since the control state information M(t) is 1 or 2, and sets the engine stop command to TRUE. Then, the engine stop command section 40e transmits this engine stop command to the engine controller 470.

In S304, the engine stop command section 40e determines that the engine should be in a driven state since the control state information M(t) is other than 1 or 2, and sets the engine stop command to FALSE. Then, the engine stop command section 40e transmits this engine stop command to the engine controller 470.

The above is the calculation flow of the engine stop command section 40e of the first embodiment.

### <Output State Transition Flow>

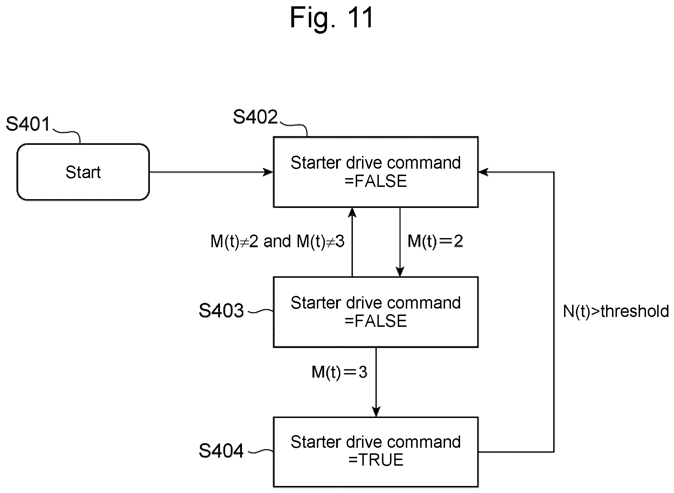

Next, the output state transition of the engine drive command section 40f of the first embodiment will be described referring to Fig. 11. Fig. 11 is an output state transition diagram of the engine drive command section 40f. In this figure, any one of the states continues until conditions for transition to another state are satisfied.

In the present embodiment, when the control state information M(t) changes from 2 to 3, the stopped state of the engine is switched to the driven state. That is, when the control state information M(t) changes from 2 to 3, the engine starter 471 needs to be driven and the engine 18 needs to be started.

S401 is the start of calculation in the engine drive command section 40f.

In S402, the engine drive command section 40f determines not to drive the engine starter, and sets a starter drive command to FALSE. When the control state information M(t) becomes 2 in S402, the state transitions to S403.

In S403, the control state information M(t) is 2, so the engine drive command section 40f determines not to drive the engine starter, and sets the starter drive command to FALSE. If the control state information M(t) changes to other than 2 or 3 in S403, the state transitions to S402. If the control state information M(t) changes to 3 in S403, the state transitions to S404.

In S404, when the control state information M(t) changes from 2 to 3, the engine drive command section 40f determines to drive the engine starter, and sets the starter drive command to TRUE. If the engine speed N(t) exceeds a threshold in S404, the state transitions to S402.

Through the above-described output state transition, the engine drive command section 40f can command the engine starter 471 to drive the engine starter when the control state information M(t) once becomes 2 and then the control state information M(t) becomes 3, and can stop the engine starter after the engine 18 is activated and the engine speed exceeds a constant value (threshold).

The above is the output state transition of the engine drive command section 40f of the first embodiment.

### <Advantageous Effects of First Embodiment>

Next, the advantageous effects of the present embodiment will be described. Here, consider a situation in which an operator on the hydraulic excavator 1 starts the system and manually operates it, and then switches to the automatic operation state in an attempt to perform the automatic operation or the remote operation.

At this time, first, the operator on the hydraulic excavator 1 changes the control state selection switch 670 (S102→S103 in Fig. 8), then operates the remote engine start/stop switch 881 of the remote control device 800 and transmits a stop command of the engine 18 (S103→S104 in Fig. 8). The next procedure is that the operator operates the remote engine start/stop switch 881 and transmits a start command of the engine 18 (S104→S105 in Fig. 8), and then operates the remote operation start/stop switch 880 and transmits a command to start the automatic operation (automatic operation start command) (S105→S106 in Fig. 8). That is, the controller 40 does not start the operation of the machine body in the automatic control state until the remote control device 800 is operated a plurality of times (until the remote engine start/stop switch 881 and the remote operation start/stop switch 880 are operated) in the automatic control state and the state where the operation of the machine body has not started (automatic control inactive state). In other words, the controller 40 prohibits a start of the operation of the machine body in the automatic control state until the remote control device 800 is operated a plurality of times (until the remote engine start/stop switch 881 and the remote operation start/stop switch 880 are operated) in the automatic control state and the state where the operation of the machine body has not started (automatic control inactive state). Further, in other words, the controller 40 sets the automatic control inactive state when the machine body control state is switched from the manual control state to the automatic control state by the control state selection switch 670, and allows transition from the automatic control inactive state to the automatic control active state by a plurality of operations of the remote control device 800 in the automatic control inactive state.

Here, when the operator changes the control state selection switch 670 and operates the remote engine start/stop switch 881 of the remote control device 800 while the operator is getting off the machine, the engine 18 stops (S103→S104 in Fig. 8). Another operation of the remote engine start/stop switch 881 of the remote control device 800 results in a standby state, and the engine 18 starts (S104→S105 in Fig. 8). At that point, the operator is able to recognize that the above procedure is in progress though the operator has not finished getting off the machine. That is, the operator near the machine body is able to recognize that a non-final procedural operation (for example, an operation of starting the engine 18 by the remote control device 800), which is a non-final operation among the plurality of operations of the remote control device 800 (the operations of the remote engine start/stop switch 881 and the remote operation start/stop switch 880), is performed.

Then, if the operator operates the gate lock lever to the lock position at that time, the standby state transitions to the automatic control inactive state, allowing the above procedure to stop (S105→S107 in Fig. 8).

After that, if the operator, after getting off the machine, operates the remote engine start/stop switch 881 of the remote control device 800 to stop the engine 18 and operates the gate lock lever to the release position, the above procedure can be restarted. That is, the controller 40 does not restart the operation of the machine body in the automatic control state until at least the remote control device 800 is operated to stop the engine 18 in the automatic control inactive state and the state where the power source is driven, as well as without operating the control state selection switch 670 (that is, while the automatic control state continues). **In** other words, the controller 40 prohibits a restart of the operation of the machine body in the automatic control state until at least the remote control device 800 is operated to stop the engine 18. Further, in other words, the controller 40 allows transition from the automatic control inactive state to the automatic control active state by a stop of the power source (the engine 18) in the automatic control inactive state and when the power source is driven. That is, operating the gate lock lever in the operator's cab 120 in the standby state results in the automatic control inactive state and the state where the power source is being driven. After becoming the automatic control inactive state and the state where the power source is being driven, the operation of the machine body does not restart until the engine 18 is stopped by the remote control device 800 once. At that point, the operator may be given a temporal margin to leave the machine body by the time the procedure completes.

As described above, according to the present embodiment, even when a start of the automatic operation is attempted while the operator is getting off the machine, the machine body will not immediately operate since the operation of the machine body does not start until the remote control device 800 (remote control) is operated a plurality of times, and through perception of the stop or start of the engine, the operator getting off the machine can recognize that an operation start procedure is in progress. In addition, the operator getting off the machine, having perceived the progress of the operation start procedure, can lock the machine body operation by operating the gate lock lever.

### <Modification of First Embodiment>

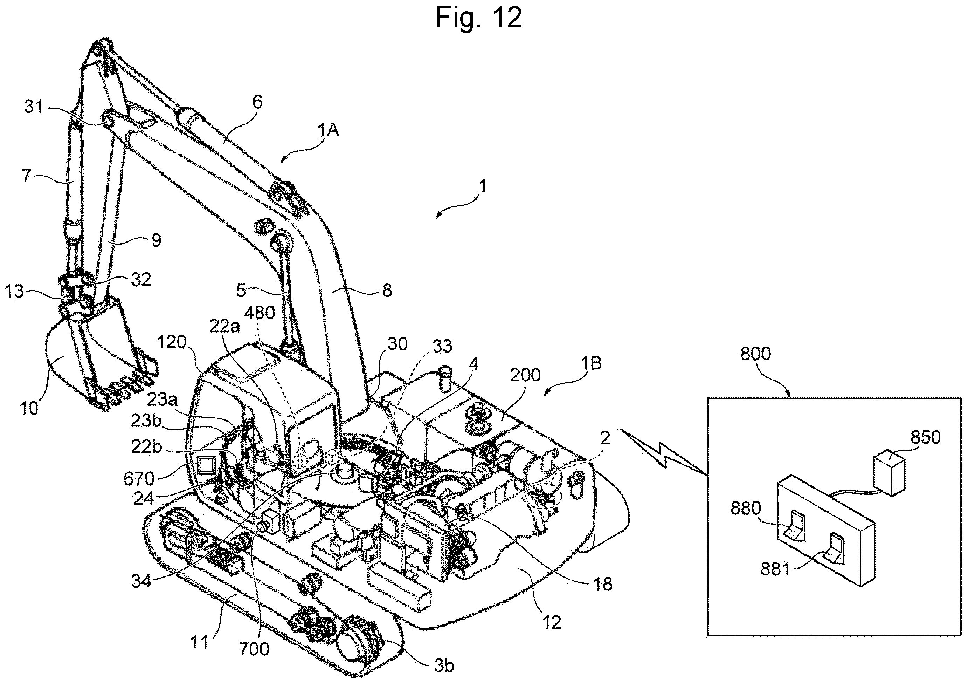

It is noted that in the present embodiment, the state where the machine body does not operate is obtained by operating the gate lock lever to transition to the automatic control inactive mode 3. However, this may be replaced with an automatic operation stop switch 700, which is provided outside of the operator's cab 120 and is operable even after the operator gets off the machine and closes the door of the operator's cab 120, as illustrated in Fig. 12, for example. That is, the controller 40 may cause transition to the automatic control inactive state when the automatic operation stop switch 700 as an operating device is operated in the automatic control state.

In another aspect, a sounding device that generates sound, such as a buzzer or a horn, or a light emitting device that generates light, such as an LED, may be disposed, and the operation start procedure may include (specifically, in the non-final procedural operation among the plurality of operations) changing an operating pattern of the sounding device, such as a buzzer or a horn, or the light emitting device, such as an LED (sound off-sound change, sounding pattern change, light off→light change, lighting pattern change, etc.), so that the operator can perceive the progress of the procedure. Further, as the operation start procedure progresses, the operating pattern of the sounding device or the light emitting device may automatically change, so that the operator can perceive the progress of the procedure.

### [Second Embodiment]

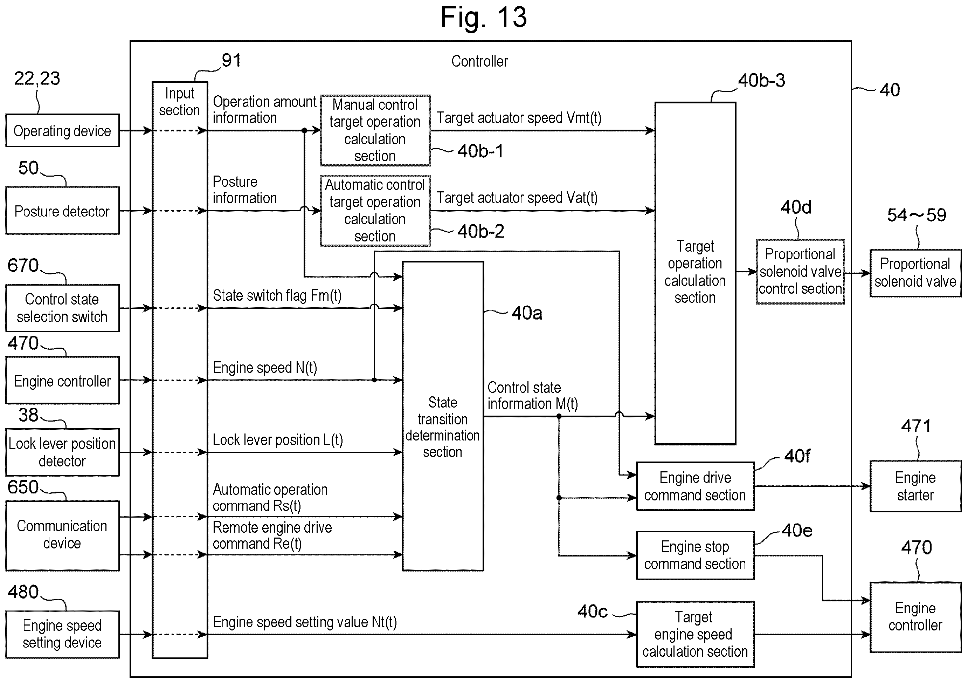

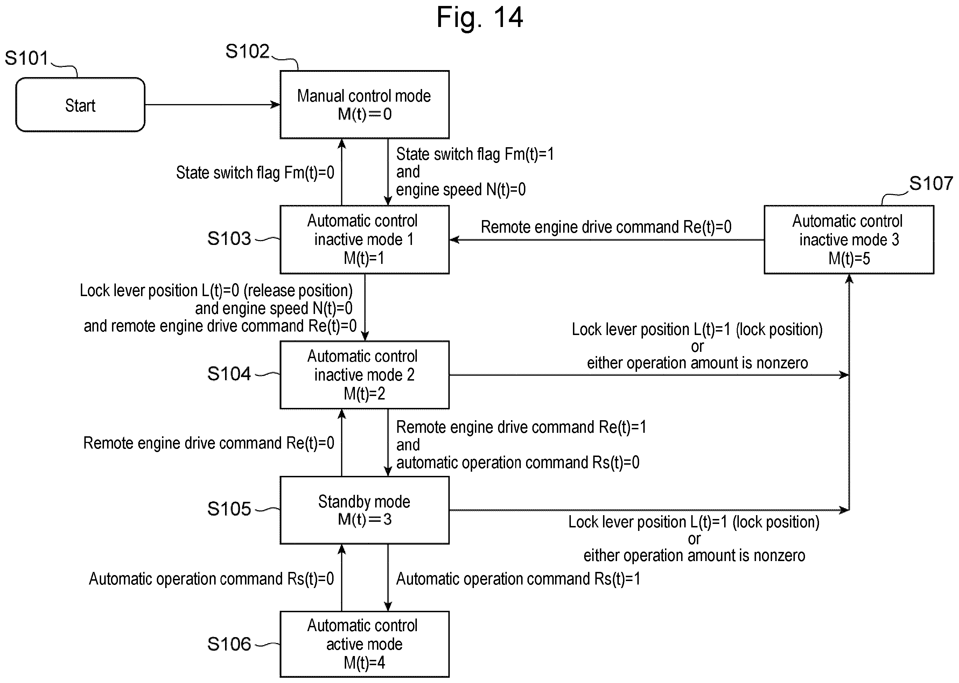

A second embodiment of the present invention will be described referring to Fig. 13 and Fig. 14. It is noted that description of a portion similar to that of the first embodiment will be omitted.

### <Functional Block inside of Controller>

The functional block inside of the controller of the second embodiment will be described referring to Fig. 13. Fig. 13 is a functional block diagram of the controller 40.

The difference from the first embodiment is that operation amount information is additionally input to the state transition determination section 40a. The state transition determination section 40a calculates the control state information M(t) also based on the operation amount information (also in consideration of the operation amount information).

The above is the functional block inside of the controller of the second embodiment.

### <State Transition Flow>

Next, the state transition of the state transition determination section 40a of the second embodiment will be described referring to Fig. 14. Fig. 14 is a state transition diagram of the state transition determination section 40a.

The difference from the first embodiment is that in addition to when the lock lever position L(t) becomes 1 in S104, the state transitions to S107 when the operation amount of either of the operating devices 22, 23 becomes nonzero.

Further, in addition to when the lock lever position L(t) becomes 1 in S105, the state transitions to S107 when the operation amount of either of the operating devices 22, 23 becomes nonzero.

That is, when the operating device 22, 23 is operated by the operator in the standby state during the automatic control state, the state transitions to the automatic control inactive state.

The above is the state transition of the state transition determination section 40a of the second embodiment.

### <Advantageous Effects of Second Embodiment>

As described above, according to the present embodiment, like the first embodiment, when a start of the automatic operation is attempted while the operator is getting off the machine, the operator getting off the machine can recognize that an operation start procedure is in progress. In addition, the operator getting off the machine, having perceived the progress of the operation start procedure, can lock the machine body operation by operating the gate lock lever. Further, also by operating the operating device 22, 23, the operator getting off the machine can lock the machine body operation.

### [Conclusion]

As described above, the automatic operation construction machine (the hydraulic excavator 1) of the present embodiment includes: a power source (the engine 18), an operating device (22, 23) provided on a machine body, a switching device (the control state selection switch 670) that outputs a request to switch a machine body control state, a communication device (650) that receives a signal from a remote control device (800) operated outside of the machine body, and a controller (40) that determines the machine body control state on the basis of an output from the switching device (the control state selection switch 670), and performs operation control according to the machine body control state. The machine body control state includes at least a manual control state of operation according to an operation command from the operating device and an automatic control state of operation according to an operation command set in advance or an operation command based on a signal received by the communication device. The automatic control state includes an automatic control inactive state in which the machine body is in a non-operating state and an automatic control active state in which the machine body is in an operating state. The controller (40) sets the automatic control inactive state when the machine body control state is switched from the manual control state to the automatic control state by the switching device (the control state selection switch 670), and allows transition from the automatic control inactive state to the automatic control active state by a plurality of operations of the remote control device (800) in the automatic control inactive state, and the operator near the machine body is able to recognize that a non-final procedural operation, which is a non-final operation among the plurality of operations of the remote control device (800), is performed. That is, the non-final procedural operation, which is a non-final operation among the plurality of operations of the remote control device (800), includes an operation that can be recognized by the operator near the machine body when the non-final procedural operation is performed.

In addition, starting the power source (the engine 18) can be commanded by the remote control device (800), and the non-final procedural operation includes at least an operation of starting the power source (the engine 18) by the remote control device (800).

The controller (40) causes transition to the automatic control inactive state when the gate lock lever or the operating device is operated in the automatic control state. A locking device (the lock valve 39) that switches between an enabled state and a disabled state of the operating device (22, 23) is provided, and the controller (40) causes transition of the machine body control state to the automatic control active state when the remote control device (800) is operated in the automatic control inactive state, and the locking device or the operating device is operated.

The controller (40) does not restart the operation of the machine body in the automatic control state until at least the remote control device (800) is operated to stop the power source (the engine 18) in the automatic control inactive state and the state where the power source is being driven, as well as without operating the switching device (the control state selection switch 670). In addition, the controller (40) allows transition from the automatic control inactive state to the automatic control active state by a stop of the power source (the engine 18) in the automatic control inactive state and when the power source is driven.

A sounding device that generates sound is further provided. An operating pattern of the sounding device changes by the non-final procedural operation. Or a light emitting device that generates light is further provided. An operating pattern of the light emitting device changes by the non-final procedural operation.

That is, in the present embodiment, in the automatically operable construction machine, the operation does not start until the remote control device (800) is operated a plurality of times after switching from the manual control mode to the automatic control mode, and the operator getting off the machine is able to recognize that the operation start procedure is in progress.

According to the present embodiment, even when a start of the automatic operation is attempted while the operator is getting off the machine, the machine body will not immediately operate since the operation of the machine body does not start until the remote control device 800 (remote control) is operated a plurality of times, and the operator getting off the machine can recognize that the operation start procedure is in progress.

It should be noted that the present invention is not limited to the aforementioned embodiments, and includes a variety of modifications. For example, although the aforementioned embodiments have been described in detail to clearly illustrate the present invention, the present invention need not include all of the configurations described in the embodiments. It is possible to replace a part of a configuration of an embodiment with a configuration of another embodiment. In addition, it is also possible to add, to a configuration of an embodiment, a configuration of another embodiment. Further, it is also possible to, for a part of a configuration of each embodiment, add, remove, or substitute a configuration of another embodiment.

In addition, some or all of the functions of the controller of the aforementioned embodiments may be implemented as hardware by designing them into an integrated circuit, for example. Alternatively, each of the functions may be implemented as software by a processor interpreting and executing a program realizing each function. Information of the programs for realizing the functions, tables, files and the like may be stored in a storage device in the controller, and also in a recording device such as a hard disk, or an SSD (Solid State Drive); or a recording medium such as an IC card, an SD card, or a DVD.

### Reference Signs List

- 1: Hydraulic excavator (automatic operation construction machine)
- 1A: Front work device
- 1B: Machine body
- 8: Boom
- 9: Arm
- 10: Bucket
- 16a to 16l: Load detector
- 18: Engine (power source)
- 22, 23: Operating device
- 24: Gate lock lever
- 30: Boom angle sensor
- 31: Arm angle sensor
- 32: Bucket angle sensor
- 38: Lock lever position detector
- 39: Lock valve (locking device)
- 40: Controller
- 50: Posture detector
- 54, 55, 56, 57, 58, 59: Proportional solenoid valve
- 470: Engine controller
- 480: Engine speed setting device
- 650: Communication device
- 670: Control state selection switch (switching device)
- 700: Automatic operation stop switch (operating device)
- 800: Remote control device
- 850: Communication device
- 880: Remote operation start/stop switch
- 881: Remote engine start/stop switch

## Claims

1. An automatic operation construction machine, comprising:
a power source;
an operating device provided on a machine body;
a switching device that outputs a request to switch a machine body control state;
a communication device that receives a signal from a remote control device operated outside of the machine body; and
a controller that determines the machine body control state on the basis of an output from the switching device, and performs operation control according to the machine body control state,
wherein the machine body control state includes at least a manual control state of operation according to an operation command from the operating device and an automatic control state of operation according to an operation command set in advance or an operation command based on a signal received by the communication device,
wherein the automatic control state includes an automatic control inactive state in which the machine body is in a non-operating state and an automatic control active state in which the machine body is in an operating state, and
wherein the controller sets the automatic control inactive state when the machine body control state is switched from the manual control state to the automatic control state by the switching device, and allows transition from the automatic control inactive state to the automatic control active state by a plurality of operations of the remote control device in the automatic control inactive state.

2. The automatic operation construction machine according to claim 1, wherein a non-final procedural operation includes an operation that can be recognized by an operator near the machine body when the non-final procedural operation is performed, the non-final procedural operation being a non-final operation among the plurality of operations of the remote control device.

3. The automatic operation construction machine according to claim 2, wherein
starting the power source can be commanded by the remote control device, and
the non-final procedural operation includes at least an operation of starting the power source by the remote control device.

4. The automatic operation construction machine according to claim 1, comprising a locking device that switches between an enabled state and a disabled state of the operating device,
wherein the controller causes transition of the machine body control state to the automatic control active state when the remote control device is operated in the automatic control inactive state, and the locking device or the operating device is operated.

5. The automatic operation construction machine according to claim 4, wherein the controller allows transition from the automatic control inactive state to the automatic control active state by a stop of the power source in the automatic control inactive state and when the power source is driven.

6. The automatic operation construction machine according to claim 2, further comprising a sounding device that generates sound,
wherein an operating pattern of the sounding device changes by the non-final procedural operation.

7. The automatic operation construction machine according to claim 2, further comprising a light emitting device that generates light,
wherein an operating pattern of the light emitting device changes by the non-final procedural operation.
